# EUROPÄISCHE PATENTANMELDUNG

(11) **EP 0 920 806 A2**
(43) Veröffentlichungstag der Anmeldung: **09.06.1999**
(21) Anmeldenummer: 98122243.3
(22) Anmeldetag: 23.11.1998
(51) Int. Cl.: A21D 2/14, A21D 8/04, A21D 13/00

(54) **Teigzubereitung für eine Backware, sowie hierdurch hergestellte Backware und Verfahren zur Herstellung dieser Backware**

(30) Priorität: 04.12.1997 DE 19753859
(71) Anmelder: Höss, Andreas, 86470 Thannhausen (DE)
(72) Erfinder: Höss, Andreas, 86470 Thannhausen (DE)
(74) Vertreter: Winter, Brandl & Partner

(57) **Zusammenfassung**

Beschrieben wird eine Teigzubereitung für eine Backware, die dadurch gekennzeichnet ist, daß zumindest ein Teilbetrag des der Teigzubereitung zuzugebenden Backmittels und/oder Wassers durch eine Tannin und/oder Quercetin enthaltende Flüssigkeit substituiert ist. Diese Flüssigkeit kann z.B. Rotwein sein. Tannin und quercetin sind für ihre gefäßerweiternde Wirkung bekannt, so daß eine hiermit versetzte Backware koronaren Beschwerden entgegenwirken kann.

## Beschreibung

Die Erfindung betrifft eine Teigzubereitung für eine Backware nach dem Oberbegriff des Anspruches 1, sowie eine mittels dieser Teigzubereitung hergestellte Backware nach dem Oberbegriff des Anspruches 11 und ein Verfahren zur Herstellung dieser Backware nach dem Oberbegriff des Anspruches 12.

Es ist seit langem bekannt, daß bestimmte, in der Natur vorkommende Stoffe, eine gefäßerweiternde Wirkung haben, wobei diese gefäßerweiternde Wirkung insbesondere dafür geeignet ist, koronaren Herzerkrankungen entgegen zu wirken. Beispiele derartiger in der Natur vorkommender Stoffe sind Tanninsäure und Quercetin, wobei sowohl Tannin als auch Quercetin beispielsweise auf natürliche Weise aus bestimmten Baumrinden oder Hölzern extrahiert werden können.

Es könnte somit durchaus daran gedacht werden bzw. es wurden auch schon diesbezüglich Versuche unternommen, Tanninsäure- und quercetinhaltige Medikamente als Prophylaxe für koronare Herzerkrankungen anzuwenden.

Die Darreichungsform kann beispielsweise in Form von Tabletten erfolgen. Nachteilig hierbei ist, daß ein nicht unerheblicher Prozentsatz der Bevölkerung eine Abneigung dagegen hat, aus reinen Prophylaxegründen Tabletten einzunehmen, und zwar regelmäßig über einen langen Zeitraum hinweg, ungeachtet der Tatsache, daß die Wirkstoffe derartiger Tabletten rein pflanzlich sind. Auch verlangt die Einnahme derartiger Tabletten eine gewisse Disziplin, um den Prophylaxecharakter zu erhalten. Schließlich müssen derartige Tabletten käuflich erworben werden.

Angesichts dieser Tatsache geht die vorliegende Erfindung von der Überlegung aus, daß eine Möglichkeit geschaffen werden müßte, die als Prophylaxestoffe gegen koronare Herzerkrankung wirkenden Substanzen Tannin und Quercetin dem menschlichen Körper anderweitig zuzuführen.

Die vorliegende Erfindung schlägt hierzu vor, in einer Teigzubereitung für eine Backware zumindest einen Teilbetrag des der Teigzubereitung zuzugebenden Backmittels und/oder Wassers durch eine Tannin und/oder Quercetin enthaltende Flüssigkeit zu substituieren.

Sowohl Tannin als auch Quercetin sind gegenüber den beim Backvorgang in der Backware herrschenden Temperaturen stabil, das heißt ändern ihre Zusammensetzung und Wirkung nicht. Auch beeinflußen Tannin und Quercetin die Backfähigkeit der hiermit versehenen Teigzubereitung nicht in nachteiliger Weise. Schließlich - und dies ist einer der wesentlichen Aspekte der vorliegenden Erfindung - nimmt praktisch jeder Mensch im Laufe des Tages und auch über einen längeren Zeitraum hinweg gesehen regelmäßig Backwaren zu sich, so daß eine kontinuierliche Versorgung des Körpers mit den im Koronarbereich günstig wirkenden Substanzen Tannin und Quercetin sichergestellt ist.

Zur Verwirklichung der erfindungsgemäßen Lehre genügt es, das Tannin und/oder Quercetin in einer entsprechenden Lösungsflüssigkeit der Teigzubereitung für die Backware zuzugeben. In besonders vorteilhafter Weise erfolgt jedoch die Zugabe von Tannin und/oder Quercetin dadurch, daß als Flüssigkeit, mit welcher das Backmittel und/oder Wasser der Teigzubereitung zumindest teilweise substituiert wird, ein Rotwein verwendet wird. Es ist seit den frühen 70er Jahren bekannt, daß mäßiger aber regelmäßiger Genuß von Rotwein invers mit der Mortalität der koronaren Herzkrankheit korreliert ist, was sich beispielsweise dadurch zeigt, daß Herzinfarkte in Frankreich und der Schweiz im Vergleich zu anderen Industrienationen in einem weitaus geringeren Umfang auftreten. Die gefäßerweiternden Eigenschaften der Weininhaltstoffe Tanninsäure und Quercetin tragen hierzu im erheblichen Umfang bei.

Neben der Einbringung der gewünschten Wirkstoffe Tannin und Quercetin in die Teigzubereitung hat die Verwendung von Rotwein als Substitut für Wasser in der Teigzubereitung noch weitere vorteilhafte Eigenschaften:

So ergibt sich durch die Verwendung von Rotwein in der fertigen Backware, beispielsweise Brot, ein interessanter Geschmack und Geruch und eine durchaus angenehme Färbung.

Weiterhin hat sich überraschenderweise herausgestellt, daß bei der Verwendung von Rotwein als Substitut für Wasser auf bestimmte Backhilfsmittel zumindest teilweise, wenn nicht sogar vollständig verzichtet werden kann. So kann beispielsweise bei der Zubereitung eines Roggenbrotes auf Roggenbrotbackmittel, welche Milch-, Essig- und Zitronensäure, Enzyme und dergleichen enthalten oder auf den Zusatz von Sauerteig vollständig verzichtet werden, das heißt die Säuerung erfolgt komplett über den Rotwein. Durch das Wegfallen des Roggenbrotbackmittels kann somit in jedem Fall ein Roggenbrot erhalten werden, welches weniger Zusatzstoffe enthält, so daß neben den positiven Eigenschaften Gefäßerweiterung, Geschmack, Geruch und Färbung noch der Vorteil einer möglichst naturbelassenen Backware erhalten wird.

Es versteht sich, daß die Lehre der vorliegenden Erfindung auf eine Vielzahl unterschiedlicher Backwaren anwendbar ist, also zum Beispiel Brot aus verschiedenen Getreidesorten, Kleingebäck wie Brötchen, Brezen, Croissants oder dergleichen, Stangenweißbrot und dergleichen. Wie sich aus der nachfolgenden genaueren Erläuterung des Erfindungsgedankens noch ergeben wird, sind hierbei zwar in der Praxis bestimmte Eckparameter oder Randbedingungen zu beachten, diese stellen jedoch in der Praxis keine Einschränkung hinsichtlich der Praktikabilität des Erfindungsgegenstandes dar.

Nachfolgend soll der Erfindungsgegenstand anhand dreier konkreter Beispiele näher erläutert werden, wobei jedoch vorab festzuhalten ist, daß diese drei Beispiele rein illustrativen und nicht einschränkenden Charakter haben.

### 1. Beispiel: Teigzubereitung für Weißbrot:

Als Trockenanteil der Teigzubereitung sind in dieser 2000g Weizenmehl des Typs 1050, 50g Weißbrotbackmittel des Typs WB24®, 40g Salz und 80g Hefe gegeben. Als Tannin und Quercetin enthaltende Flüssigkeit, mit der das normalerweise verwendete Wasser substituiert wird, werden 1,4 bis 1,5 Liter Rotwein zugegeben. Als Rotwein wird vorzugsweise ein "en Barrique" ausgebauter Rotwein verwendet, das heißt ein in Eichenfässern ausgebauter Rotwein französischer oder auch italienischer Herkunft. Gerade derartige en Barrique ausgebaute Rotweine haben Tanninsäure und Quercetin als gefäßerweiternde Wirkstoffe in hohem Maße enthalten.

Die Inhaltsstoffe dieser Teigzubereitung werden auf übliche Weise durchgeknetet, wonach dann der Teig 30 Minuten ruht. Hierbei zeigte sich, daß die sogenannte Gare gegenüber einem herkömmlichen, das heißt mit Wasser zubereiteten Teig deutlich verlängert ist. Zurückzuführen ist dies darauf, daß bestimmte Inhaltsstoffe des Rotweines die Hefebakterien in ihrem Stoffwechsel verzögern oder hemmen.

Nach der Teigruhe wird der Teig auf übliche Weise weiter bearbeitet und dann gebacken.

Als Ergebnis konnte ein Weißbrot mit gegenüber üblichem Weißbrot geringerem Volumen aufgrund der weniger optimalen Gare erhalten werden. Das Brot hatte eine leicht rötliche Krumenfarbe mit angenehmen Rotweingeschmack.

### 2. Beispiel: Teigzubereitung für Roggenbrot A

Als Trockenanteile der Teigzubereitung für ein Roggenbrot wurden verwendet 2kg Roggenmehl des Typs 997, 25g Roggenbrotbackmittel R22®, 40g Salz, 80g Hefe und 20g Brotbackmittel "Doppelfrisch"®. Als Flüssigkeitsanteile wurden 0,7 Liter Wasser und ca. 0,7 Liter Rotwein zugegeben.

Der Teig wurde dann wieder auf übliche Weise im Spiralkneter durchgeknetet, gefolgt von einer 30 minütigen Teigruhe, wobei sich die daran anschließende Stückgare normal entwickelte.

Im Anschluß daran wurde ein Brotlaib abgewogen, ausgeformt, nochmal der Gare unterworfen und dann gebacken. Genauer gesagt, es werden zum Erhalt eines 750g schweren Brotes 870g von der Teigmasse abgewogen, wonach dann der Brotlaib ausgeformt und auf ein Backblech abgesetzt wird.

Es folgt die Gare im Gärraum bei ca. 35°C und 80% relativer Luftfeuchtigkeit. Nach der Gare wird mit normaler Brotbacktemperatur bei fallender Hitze von 270°C bis 220°C mit Schwadengabe gebacken. Sodann wird bei geöffnetem Zug ausgebacken.

Das Ergebnis war ein typisches Roggenbrot mit direkter Führung und angenehmen Geschmack.

### 3. Beispiel: Teigzubereitung für Roggenbrot B

Die Teigzubereitung im dritten Beispiel besteht aus 2kg Roggenmehl des Typs 997, 40g Salz, 80g Hefe und 20g Brotbackmittel "Doppelfrisch"®, wobei hier im Gegensatz zum obigen zweiten Beispiel auf die Zugabe des Roggenbrotbackmittels R22® vollständig verzichtet wurde. Ebenfalls wurden die 0,7 Liter Wasser aus Beispiel 2 nun vollständig durch Rotwein substituiert oder ersetzt, so daß die Rotweinzugabe im Beispiel 3 ca. 1,4 Liter beträgt. Durch den Wegfall des Roggenbrotbackmittels R22®, welches die zur Führung des Roggenteiges notwendigen Säuerungsmittel wie Milch-, Essig- oder Zitronensäure enthält, erfolgt die Säuerung des Roggenteiges ausschließlich über die Rotweinzugabe. Es kann somit unter Verzicht von zusätzlichen Hilfsmitteln dennoch eine Teigzubereitung für ein Roggenbrot geschaffen werden, bei der die Stückgare normal bis leicht erhöht ist und sich im Ergebnis nach dem Ausbacken gemäß obigen Ausführungen ein typisches Roggenbrot ergibt mit nicht zu intensivem angenehmen Rotweingeschmack und angenehm-interessanter Farbe.

In der Zusammenfassung kann somit bezüglich der Beispiele 2 und 3 gesagt werden, daß nach der Stückgare das Volumen bei Beispiel 2 kleiner ist als das bei Beispiel 3. Umgekehrt ist die Stückgare bei Beispiel 2 länger als bei Beispiel 3. Zurückzuführen ist dies vermutlich auf eine mögliche Hemmung der Hefeaktivität durch Inhaltsstoffe des Rotweins, an Mangel an Ascorbinsäure, sowie an Mangel an Enzymen aus dem Roggenbrotbackmittel R22®, welches im Beispiel 2 in einer Menge von 25g zugegeben wurde, was gegenüber einem normalen Roggenbrot-Teigmischungsrezept eine Verringerung von 50% beträgt und welches im Beispiel 3 vollständig weggelassen wurde.

Hieraus kann gefolgert werden, daß nach enzymatischer Einstellung, einer eventuellen Zuckerzugabe, einer ausreichender Ascorbinsäurezugabe und einer eventuellen zusätzlichen konventionellen Teigsäuerung keine bis sehr geringe Beeinflussung des Backergebnisses durch die Rotweinzugabe hinsichtlich Volumen, Form, Krumenelastizität, Porung etc. zu erwarten sind, jedoch ein interessanter Rotweingeschmack und ein abgerundetes Aroma erhalten werden können. Darüber hinaus werden durch den Rotwein Tannin und Quercetin in die Backware, das heißt beispielsweise das Brot eingebracht, so daß eine im Regelfall tägliche und gegebenenfalls mehrfach über den Tag hinweg verteilte Gabe dieser gesundheitsfördernden Stoffe sichergestellt ist.

Wie bereits weiter oben erläutert, ist der Gedanke der vorliegenden Erfindung, zumindest einen Teilbetrag des Backmittels und/oder Wassers in der Teigzubereitung durch eine Tannin und/oder Quercetin enthaltende Flüssigkeit zu substituieren, nicht auf die genannten Beispiele (Weizenbrot und Roggenbrot) beschränkt. Der Gedanke der vorliegenden Erfindung kann gleichermaßen auch bei anderen Backwaren Anwendung finden, beispielsweise Brote anderer Getreidesorten, wie beispielsweise Dinkel, Emmer oder Einkorn, Mischbroten aus verschiedenen Getreide- bzw. Mehlarten, Broten mit weiteren Zuschlägen, wie Sonnenblumenkerne, Leinsamen, Sesam, Mohn, Gewürze, Haferflocken etc.. Auch sind von der "klassischen" Brotform abweichende Backwaren mit eingeschlossen, also beispielsweise Toasthrot, Stangenwießrot- oder dergleichen. Weiterhin ist der Gegenstand der vorliegenden Erfindung nicht auf Brote im klassischen Sinn beschränkt, sondern kann auch bei Kleingebäck angewendet werden, also Semmeln, Laugengebäck etc.

Darüber hinaus liegt es im Rahmen der vorliegenden Erfindung, fertige Backmischungen etwa nach den oben angegebenen Beispielen 2 und 3 bereitzustellen, welche dann verbraucherseiting lediglich mit einer entsprechenden Rotweinzugabe versehen werden müßten. Alternativ hierzu wäre es möglich, die wesentlichsten Inhaltsstoffe des Rotweines, also die geruchs-, geschmacks- und farbbestimmenden Anteile aus dem Rotwein zu extrahieren und diesen Extrakt in Pulver-, Granulat- oder Sirupform der Backmischung beizufügen, wobei dann durch einfache Wasserzugabe eine äquivalente Wirkung zu einer "echten" Rotweinzugabe erhaltbar sein kann.

Weiterhin ist es im nahmen der vorliegenden Erfindung möglich, sogenannte "Convenience Products" auf der Grundlage der erfindungsgemäßen Lehre bereitzustellen. Derartige Produkte sind vor-, teil- oder halbgebackene Backwaren, z. B. Brötchen, Baguettes etc. oder verpackte Fertigteige für z. B. Croissants oder Blätterteig. Diese Produkte sind zumeist in Folien eingeschweißt und müssen vom Verbraucher nach Entnahme aus der Verpackung fertiggebacken werden. Da die Backwaren herstellerseitig nur vor-, teil- oder halbgebackenen werden, werden die zur Abtötung von Mikroorganismen notwendigen Kerntemperaturen von ca. 99°C bei der Herstellung nicht erreicht. Diese Backwaren sind somit nach ihrer Verpackung - auch aufgrund des noch relativ hohen Feuchtigkeitsgehaltes - anfällig für Schimmelpilze, Bakterien- oder dergl., z.B. den bazillus subtilus oder den hazillus mesentericus. Man ist daher praktisch dazu gezwungen, derartigen Produkten Konservierungsstoffe zuzugeben und/oder sie unter Schutzgasatmosphäre (CO₂) abzupacken. Ein ähnliches Problem ergibt sich auch bei Schnittbrot (z. B. Toastbrot), das aufgrund der Mehrzahl von Schnittflächen eine hohe Oberfläche hat und entsprechend anfällig für Befall durch Mikroorganismen, Bakterien etc. ist.

Bei der Verwendung von Rotwein als Wassersubstituent lassen sich diese Probleme beseitigen: im obigen Beispiel 1 ist dargelegt, daß bestimmte Inhaltsstoffe des Rotweines die Hefebakterien in ihrem Stoffwechsel verzögern oder hemmen. Der Grund ist, daß insbesondere en Barrique ausgebaute Weine bei ihrer Lagerung in den Eichenfässern Stoffe aus dem Holz aufnehmen, die dort von Natur aus vorhanden sind und hemmend auf Mikroorganismen, Pilze und Bakterien wirken. Diese Stoffe sind dann auch für die Stoffwechselhemmung- oder -verzögerung der Hefebakterien verantwortlich. Substituiert man das Wasser in der Backware durch Rotwein, erhält man so einen natürlichen Konservierungsstoff ohne den Zusatz irgendwelcher künstlicher Zusatzstoffe.

Anstelle von Rotwein kann auch ein - ebenfalls bevorzugt ein en Barrique ausgebauter - Weißwein zur Anwendung gelangen. Weiterhin können anstelle von Rotwein auch tannin- und/oder quercetinhaltige Weinnebenprodukte (Maische, Treber, etc.) oder im Tannin- und/oder Quercetingehalt optimierte Weinprodukte verwendet werden. Anders gesagt, obgleich die obige Beschreibung unter hauptsächlicher Bezugnahme auf Rotwein als Wassersubstitut erfolgte, ist der Grundgedanke der vorliegenden Erfindung allgemein darin zu sehen, die gefäßerweiternden Stoffe Tannin und/oder Quercetin in eine Teigzubereitung für Backwaren einzubringen.

## Patentansprüche

1. Teigzubereitung für eine Backware, dadurch gekennzeichnet, daß zumindest ein Teilbetrag des der Teigzubereitung zuzugebenden Backmittels und/oder Wassers durch eine Tannin und/oder Quercetin enthaltende Flüssigkeit substituiert ist.

2. Teigzubereitung nach Anspruch 1, dadurch gekennzeichnet, daß die Flüssigkeit im Bereich von etwa 15 Gew.-% bis 45 Gew.-%, insbesondere im Bereich von etwa 19 Gew.-% bis 41 Gew.-% den Trockenanteilen der Teigzubereitung zugegeben wird.

3. Teigzubereitung nach Anspruch 1 oder 2, dadurch gekennzeichnet, daß die Flüssigkeit Rotwein ist.

4. Teigzubereitung nach einem der Ansprüche 1 bis 3, dadurch gekennzeichnet, daß sie für ein Weizenbrot ist.

5. Teigzubereitung nach einem der Ansprüche 1 bis 3, dadurch gekennzeichnet, daß sie für ein Roggenbrot ist.

6. Teigzubereitung nach einem der Ansprüche 1 bis 3, dadurch gekennzeichnet, daß sie für ein Dinkel-, Emmer- oder Einkornbrot ist.

7. Teigzubereitung nach einem der Ansprüche 1 bis 3, dadurch gekennzeichnet, daß sie für Kleingebäck, insbesondere Semmeln, Brezen oder dergl. ist.

8. Teigzubereitung nach Anspruch 4, gekennzeichnet durch folgende Rezeptur:
ca. 55 Gew.-% Weizenmehl Typ 1050,
ca. 1.5 Gew.-% Weißbrotbackmittel WB24,
ca. 1.2 Gew.-% Salz,
ca. 2.3 Gew.-% Hefe, und
ca. 40 Gew.-% Rotwein.

9. Teigzubereitung nach Anspruch 5, gekennzeichnet durch folgende Rezeptur:
ca. 55 Gew.-% Roggenmehl Typ 997,
ca. 0.8 Gew.-% Roggenbrotbackmittel R 22,
ca. 1.2 Gew.-% Salz,
ca. 2.3 Gew.-% Hefe,
ca. 0.7 Gew.-% Brotbackmittel "Doppelfrisch",
ca. 20 Gew.-% Rotwein, und
ca. 20 Gew.-% Wasser.

10. Teigzubereitung nach Anspruch 5, gekennzeichnet durch folgende Rezeptur:
ca. 55 Gew.-% Roggenmehl Typ 997,
ca. 1.1 Gew.-% Salz,
ca. 2.2 Gew.-% Hefe,
ca. 0.7 Gew.-% Brotbackmittel "Doppelfrisch", und
ca. 41 Gew.-% Rotwein.

11. Backware, gekennzeichnet durch ihre Herstellung mittels einer Teigzubereitung nach einem oder mehreren der Ansprüche 1 bis 10.

12. Verfahren zur Herstellung einer Backware, insbesondere eines Brotes, gekennzeichnet durch den Schritt des Substituierens zumindest eines Teilbetrags des der Teigzubereitung für die Backware zuzugebenden Backmittels und/oder Wassers durch eine Tannin und/oder Quercetin enthaltende Flüssigkeit.

13. Verfahren nach Anspruch 12, dadurch gekennzeichnet, daß die Flüssigkeit im Bereich von etwa 15 Gew.-% bis 45 Gew.-%, insbesondere von etwa 19 Gew.-% bis 41 Gew.-% den Trockenanteilen der Teigmischung zugegeben wird.

14. Verfahren nach Anspruch 12 oder 13, dadurch gekennzeichnet, daß die Flüssigkeit Rotwein ist.

15. Backware, dadurch gekennzeichnet, daß sie durch ein Verfahren nach einem oder mehreren der Ansprüche 12 bis 14 hergestellt ist.

16. Verwendung einer Tannin und/oder Quercetin enthaltenden Flüssigkeit als Zuschlagsstoff einer Teigzubereitung für eine Backware.

17. Verwendung der Flüssigkeit nach Anspruch 16, wobei diese Flüssigkeit Rotwein ist.
